# EUROPEAN PATENT APPLICATION

(11) **EP 4 227 394 A1**
(43) Date of publication of application: **16.08.2023**
(21) Application number: 21877253.1
(22) Date of filing: 24.08.2021
(51) Int. Cl.: C12G 3/06

(54) **CARBONATED ALCOHOLIC BEVERAGE HAVING CITRUS FLAVOR, AND METHOD FOR PRODUCING SAME**

(30) Priority: 09.10.2020 JP 2020171233
(71) Applicant: Asahi Group Holdings, Ltd., Tokyo 130-8602 (JP); Asahi Breweries, Ltd., Tokyo 130-8602 (JP)
(72) Inventor: MORI, Gyohei, Moriya-shi, Ibaraki 302-0106 (JP); ENDO, Minori, Moriya-shi, Ibaraki 302-0106 (JP)
(74) Representative: J A Kemp LLP
(86) International application number: PCT/JP2021/030966
(87) International publication number: WO 2022/074950

(57) **Abstract**

An object of the invention is to provide a citrus-flavored carbonated alcoholic beverage having low extract content and alcohol concentration, including fruit juice, and achieving both fruit juice feeling and easiness to drink. The means of solving the problem is a citrus-flavored carbonated alcoholic beverage including drinking water, carbon dioxide gas, 1 to 5% (v/v) of alcohol, and less than 4% (w/w) in fruit juice percentage of citrus fruit juice, wherein the citrus-flavored carbonated alcoholic beverage includes: 10% (w/w) or less of extract content, and linalool and cis-3-hexenol in such amounts that their concentration ratio is 15 to 55.

## Description

### Technical Field

The present invention relates to a citrus-flavored carbonated alcoholic beverage, in particular to a citrus-flavored carbonated alcoholic beverage which has a bland flavor, a light aftertaste, and is easy to drink.

### Background Art

For citrus-flavored carbonated alcoholic beverages, products including citrus fruit juice, for example, grapefruit, lemon, lime, orange and the like are commercially available. For example, "Chu-hai" (i.e., "Shochu" and soda) is originally a citrus-flavored carbonated alcoholic beverage made easier to drink by diluting Ko-group shochu with lemon and carbonated water. In addition, a number of fruit-flavored alcoholic beverages in which various citrus fruit juices are diluted with carbonated water and alcohol have been commercialized.

Patent Document 1 discloses a low-alcohol beverage in which an alcohol feeling is suppressed by adjusting the concentration of high intensity sweetener, citric acid acidity, and the like. Patent Document 2 discloses a starches-saccharides-zero carbonated alcoholic beverage not including fruit juice or a fruit-derived component, and having excellent deliciousness and a refreshing feeling. Patent Document 3 discloses a fruit juice-including low-alcohol beverage with reduced harsh taste and suppressed sweetness remaining behind by adjusting the content of R-linalool, octanal, and the like.

### [Prior Art Documents]

### [Patent Documents]

[Patent Document 1] JP 2011-36228 A
[Patent Document 2] JP 2015-136352 A
[Patent Document 3] JP 2019-140924 A

### Summary of Invention

### [Problem to be solved by the invention]

Conventional citrus-flavored carbonated alcoholic beverages have been counted on the characteristics of providing a feeling of fulfillment and satisfaction as article of taste. They have, therefore, a flavor that emphasizes fruit juice feeling and rich feeling.

On the other hand, in recent years, consumer preferences for beverages have also turned toward a drinking feeling with lower fruit juice feeling and rich feeling. For example, carbonated water has become a latest trend. In other words, also as for citrus-flavored carbonated alcoholic beverages, there is a demand for bland, light aftertaste, and easy-to-drink flavor like water, unlike the conventional direction.

If light aftertaste and bland flavor is aimed, a method is considered in which the composition is made closer to that of water by, for example, reducing the sweetness degree or by reducing the fruit juice percentage. However, citrus-flavored carbonated alcoholic beverages are beverages made to be easier to drink by using citrus sweetness and sourness to alleviate miscellaneous tastes such as bitterness and astringency, and pungent smell of alcohol. Therefore, when the fruit juice percentage is reduced, for example, by dilution, citrus flavor is weakened, fruit juice feeling is reduced, and alcohol-derived miscellaneous tastes such as bitterness and astringency, or pungent smell is emphasized, conversely resulting in a difficult-to-drink flavor.

The present invention solves the above problem, and an object thereof is to provide a citrus-flavored carbonated alcoholic beverage which has citrus fruit juice feeling, reduced alcohol-derived miscellaneous tastes or pungent smell, bland flavor and light aftertaste, and is easy to drink.

### Summary of Invention

### [Means of solving the problem]

The present invention provides a citrus-flavored carbonated alcoholic beverage including drinking water, carbon dioxide gas, 1 to 5% (v/v) of alcohol, and less than 4% (w/w) in fruit juice percentage of citrus fruit juice, wherein the citrus-flavored carbonated alcoholic beverage includes:
10% (w/w) or less of extract content, and
linalool and cis-3-hexenol in such amounts that their concentration ratio is 15 to 55.

In one embodiment, the linalool is included in a concentration of 0.01 ppm to 10 ppm.

In one embodiment, the citrus is at least one selected from the group consisting of lemon and grapefruit.

In one embodiment, the citrus-flavored carbonated alcoholic beverage includes at least one selected from the group consisting of citrus-flavored flavorings, sweeteners and sour agents.

In one embodiment, the citrus-flavored carbonated alcoholic beverage includes no high intensity sweetener.

In one embodiment, the citrus flavored carbonated alcoholic beverage includes 1 to 3% (w/w) in fruit juice percentage of citrus fruit juice.

In one embodiment, the citrus-flavored carbonated alcoholic beverage includes 0.3 to 3% (w/w) of extract content.

Also, the present invention provides a method for producing a citrus-flavored carbonated alcoholic beverage including drinking water, carbon dioxide gas, 1 to 5% (v/v) of alcohol, and less than 4% (w/w) in fruit juice percentage of citrus fruit juice, the method including:
a step of adjusting the extract content to 10% (w/w) or less; and
a step of including linalool and cis-3-hexenol in such amounts that their concentration ratio is 15 to 55.

Also, the present invention provides a method for achieving both fruit juice feeling and easiness to drink of a citrus-flavored carbonated alcoholic beverage including drinking water, carbon dioxide gas, 1 to 5% (v/v) of alcohol, and less than 4% in fruit juice percentage of citrus fruit juice, the method including:
a step of adjusting the extract content to 10% (w/w) or less; and
a step of including linalool and cis-3-hexenol in such amounts that their concentration ratio is 15 to 55.

### [Effect of the invention]

The citrus-flavored carbonated alcoholic beverage of the present invention has a citrus fruit juice feeling, reduced alcohol-derived miscellaneous tastes or pungent smell, a bland flavor and a light aftertaste, and is easy to drink.

### Description of Embodiments

The citrus-flavored carbonated alcoholic beverage of the present invention (hereinafter sometimes simply referred to as "alcoholic beverage") includes alcohol, i.e., ethanol, in an amount of 1 to 5% (v/v) . By making the amount of the alcohol 5% (v/v) or less, the alcohol-derived miscellaneous tastes or pungent smell in alcoholic beverages becomes easy to reduce. When the alcohol concentration is less than 1% (v/v), the flavor balance as the alcoholic beverage tends to be poor. When it exceeds 5% (v/v), alcohol-derived miscellaneous tastes such as bitterness and astringency, and pungent smell are strong, resulting in a difficult-to-drink flavor. The alcohol concentration of alcoholic beverages is preferably 1.5 to 5% (v/v), and more preferably 2 to 5% (v/v).

The alcohol used in the alcoholic beverage of the present invention is not particularly limited if it is one different from fruit component-including raw material liquor. When fruit component-including raw material liquor is used, since a plant tissue component is introduced, then the storage stability of alcoholic beverages becomes poor.

Specific examples of the alcohol include raw material alcohol, spirits (vodka, gin, rum, and the like), liqueurs, whiskey, shochu (i.e., groups Ko, Otsu or mixture of groups Ko and Otsu) and the like, and brewed liquors such as sake, wine, and beer. These may be employed alone or in combination of more than one.

The alcoholic beverage of the present invention includes citrus fruit juice in an amount of less than 4% (w/w) in terms of fruit juice percentage. Citrus fruit juice has good strength and balance between sweetness and sourness, and provides juiciness or fruit juice feeling, which reduces miscellaneous tastes and pungent smell of alcohol. When the fruit juice percentage is 4% (w/w) or more, alcoholic beverages leave lingering sweetness, and may cause a sticky feeling in flavor. In addition, citrus juice deteriorates due to oxygen, heat and the like, and when used in large quantities, bitterness and astringency will stand out. The alcoholic beverage preferably has a fruit juice percentage of 0.5 to 3.5% (w/w), and more preferably 1 to 3% (w/w).

Citrus fruit juice is a juice squeezed from fruit belonging to citrus fruits. Examples of citrus fruits include lemon, grapefruit, orange, lime, iyokan (citrus iyo), unshu mikan (citrus unshu), kabosu (citrus kabosu), kishu mikan (citrus kinokuni), chinotto (citrus myrtifolia), kouji (citrus leiocarpa), sanbo-kan (citrus sulcata), citron (citrus medica), jabara (citrus jabara), sudachi (citrus sudachi), daidai (citrus daidai), tachibana (citrus tachibana), tangor, natsumikan (citrus natsudaidai), hassaku (citrus hassaku), hanayuzu (citrus hanayu), hyuganatsu (citrus tamurana), hirami lemon (citrus depressa) (shikuwasa), pomelo (citrus maxima), ponkan (citrus reticulata) (mandarin orange), yuzu (citrus junos) and the like. Among citrus fruits, lemon and grapefruit are preferred because they have high affinity for alcohol, and have sourness and bitterness.

As to citrus fruit juice, for example, various fruit juices such as concentrated fruit juice, reconstituted fruit juice, and straight fruit juice, fruit purees, and diluted liquids, concentrated liquids, mixed liquids of these may be used. The citrus fruit juice may be made from one type of fruit or more than one type of fruit.

The alcoholic beverage of the present invention includes linalool. Linalool is a compound belonging to monoterpene alcohols represented by the chemical formula C₁₀H₁₈O. Linalool acts synergistically with octanal described below, and is able to suppress miscellaneous tastes derived from alcohol and fruit juice, which become strong when citrus flavor of the alcoholic beverages becomes thin and bland.

The linalool content may be 0.01 to 10 ppm. If the linalool content is less than 0.01 ppm, suppression of the alcohol odor is likely to be insufficient. If it exceeds 10 ppm, miscellaneous tastes may be produced. The linalool content is preferably 0.01 to 8 ppm, and more preferably 0.01 to 5 ppm. The linalool content may be measured by known methods such as a SPME-GC-MS method.

In one preferred embodiment, the linalool content of the alcoholic beverage is 0.005 to 3 ppm, preferably 0.01 to 2 ppm, and still more preferably 0.03 to 1 ppm. If the linalool content is less than 0.005 ppm, suppression of the alcohol odor is likely to become insufficient.

The alcoholic beverage of the present invention includes cis-3-hexenol. Cis-3-Hexenol is a linear organic compound represented by the chemical formula C₆H₁₀O. Cis-3-hexenol acts synergistically with linalool, and is able to suppress miscellaneous tastes derived from alcohol and fruit juice, which become strong when citrus flavor of the alcoholic beverages becomes thin and bland.

Linalool and cis-3-hexenol may be present in predetermined amounts in the alcoholic beverage produced. Linalool and cis-3-hexenol may be included in alcoholic beverages as components of raw materials such as citrus fruit juice, citrus-flavored flavorings, or those which are commercially available as the compounds may be used respectively.

The cis-3-hexenol content is in an amount such that the ratio of the linalool concentration to the cis-3-hexenol concentration, that is (linalool concentration/cis-3-hexenol concentration), is 15 to 55. If this ratio is less than 15, the suppression of alcohol odor is insufficient, and if it exceeds 55, miscellaneous tastes may be produced. The ratio of the linalool concentration to the cis-3-hexenol concentration is preferably 20 to 50, and more preferably 25 to 45. The cis-3-hexenol content may be measured by known methods such as a SPME-GC-MS method.

The alcoholic beverage of the present invention includes carbon dioxide gas. Carbon dioxide gas is preferably used in an amount such that the gas volume is in the range of 1.0 to 4.5. If the gas volume of carbon dioxide gas is less than 1.0, carbonated beverage-like refreshing feeling becomes poor, and if it exceeds 4.5, carbonation stimulus and bitterness become too strong to lower deliciousness of the beverage. The gas volume of carbon dioxide gas is preferably 1.5 to 3.5 gas volumes.

The alcoholic beverage of the present invention preferably includes a sweet substance. Sweet substances are substances capable of imparting sweetness to a beverage. For example, saccharides and sugar alcohols fall under sweet substances.

Specific examples of saccharides include fructose-glucose liquid sugar, sugar, maltose, and lactose.

Specific examples of sugar alcohols include reduced maltose starch syrup, erythritol, xylitol, and maltitol.

As the sweet substance, one type of sweet substance may be used, or more than one type of substance may be used. Preferably, the sweet substance is fructose-glucose liquid sugar (i.e., high-fructose corn syrup) or the like.

The alcoholic beverage of the present invention preferably does not include a high intensity sweetener. When high intensity sweetener is employed, a miscellaneous taste can be imparted. The high intensity sweetener here refers to substances classified as "Sweeteners" in "Specified Food Additives" specified by the Minister of Health, Labor and Welfare, and in "Existing Food Additives". The "Existing Food Additives" include items determined as natural additives that have conventionally been used for many years. Substances included in the "Specified Food Additives" and the "Existing Food Additives" are listed on the website of the Japan Food Additives Association.

Specific examples of high intensity sweeteners include aspartame, acesulfame potassium, xylitol, disodium glycyrrhizinate, saccharin, calcium saccharin, sodium saccharin, sucralose, neotame, arabinose, licorice extract, xylose, stevia, thaumatin, momorudica grosvenori extract, rhamnose and ribose.

The alcoholic beverage of the present invention preferably includes a sour substance. Sour substances are substances capable of imparting sourness to beverages. Generally, sour substances are sour agents, and acids or salts thereof that are harmless to a human body. Sour agents herein refer to substances classified as "Sour agents" in the above "Specified Food Additives" and "Existing Food Additives".

Specific examples of sour agents include adipic acid, citric acid, trisodium citrate, glucono-delta-lactone, gluconic acid, potassium gluconate, sodium gluconate, succinic acid, monosodium succinate, disodium succinate, sodium acetate, DL-tartaric acid, L-tartaric acid, DL-sodium tartrate, L-sodium tartrate, carbon dioxide, lactic acid, sodium lactate, glacial acetic acid, fumaric acid, monosodium fumarate, DL-malic acid, DL-sodium maleate, and phosphoric acid. These may be used in the form of salts, such as potassium and sodium salts, or in the form of buffer solutions.

As the sour substance, one type of substance may be used or more than one type of substance may be used. Preferably, the sour substance is citric acid or the like.

The alcoholic beverage of the present invention includes a citrus flavored flavoring, if necessary. Citrus flavored flavorings are flavorings that reproduce the aroma of edible citrus fruit. The citrus flavored flavoring is included to enhance the cooling feeling and refreshing feeling of alcoholic beverages and make them easier to drink. For example, concentrated fruit juice may lose its fragrance during the production process. The flavoring is useful for supplementing the reduced fragrance of the concentrated fruit juice. As the citrus flavored flavoring, one type of flavor may be used, or more than one type of flavor may be used.

In the alcoholic beverage of the present invention, raw materials and food additives usually used in the field of carbonated alcoholic beverages, such as pigments, flavorings, vitamins, amino acids, water-soluble dietary fiber, stabilizers, and emulsifiers, may optionally be employed. Specific examples of pigments include caramel and the like.

The alcoholic beverage of the present invention includes 10% (w/w) or less of extract content. The extract content means the concentration of a non-volatile solid component included in the alcoholic beverage, and mostly carbohydrates and proteins are main components. By reducing content of extract components, aftertaste of the alcoholic beverage becomes light. The extract content of the alcoholic beverage is preferably 6% (w/w) or less, and more preferably 4% (w/w) or less.

In one preferred embodiment, the extract content of the alcoholic beverage is 0.3 to 5% (w/w) or less, more preferably 0.5 to 3% (w/w), and still more preferably 0.6 to 2% (w/w). When the extract content of the alcoholic beverage is less than 0.3% (w/w), miscellaneous tastes or pungent smell derived from alcohol is hardly to reduce.

The method for producing an alcoholic beverage of the present invention includes the steps normally conducted in the production of alcoholic beverages, as described below as an example. Drinking water, alcohol, citrus fruit juice, linalool, cis-3-hexenol, and other components such as sweet substances, sour substances, citrus-flavored flavorings, and food additives are uniformly mixed in predetermined amounts. The resulting mixed liquid is then cooled. Carbonation is conducted as necessary. Thereafter, the intended alcoholic beverages can be produced by filling it into containers, followed by sealing. After carbonation, it may be filtered using a membrane filter. Further, after preparing an intermediate liquid in which the included components are concentrated, it may be diluted with water or carbonated water to prepare alcoholic beverages.

The present invention will be further specifically described by the following examples, but the present invention is not limited to these examples.

### [Examples]

### <Example 1>

### Lemon-flavored alcoholic beverage

**[Table 1]**

| Raw material | Blending amount |
|---|---|
| Brewing alcohol (alcohol concentration 95% (v/v)) | 43.2 mL |
| 55% Fructose-glucose liquid sugar | 10.0 g |
| Lemon flavoring | 1.0 g |
| Citric acid (anhydrous) | 1.5 g |
| Sodium citrate | 0.4 g |
| Pure water | Until reaching 1,000mL |
| Total | 1,000 mL |

Base liquid 1 with the composition shown in Table 1 was prepared. Base liquid 1 had an alcohol concentration of 4.0% (v/v), and a sweetness degree of 1.0. In Table 1, as a lemon flavoring, a solution in which 6.25 µL of citral (purity of 96% or more) and 30 mL of ethanol were mixed was used. Carbon dioxide gas was dissolved in base liquid 1 to prepare a lemon-flavored alcoholic beverage having a carbon dioxide gas volume of 3.3. This served as beverage sample 1-1.

Base liquid 1 was prepared according to the composition shown in Table 1. To base liquid 1, 6-fold concentrated lemon transparent fruit juice in an amount such that the fruit juice percentage was 1%, linalool in a concentration of 0.07 ppm, and cis-3-hexenol in an amount such that the (linalool concentration/cis-3-hexenol concentration) was a value shown in in Table 2 were added, and carbon dioxide gas was dissolved in the same manner as above to prepare beverage samples 1-2 through 1-8.

The extract content (% (w/w)) and citric acid acidity (g/100 mL) of the obtained beverage samples 1-1 to 1-8 were determined. These were also subjected to sensory tests. Sensory tests of the beverage samples were conducted as follows.

Five panelists in charge of developing fruit-flavored alcoholic beverages tasted each beverage sample and evaluated the samples on a 5-levels scale using, as evaluation items, "reduction of miscellaneous tastes and odor of alcohol (that is, there are no ethanol-derived miscellaneous tastes such as bitterness and astringency, or pungent smell)", "citrus fruit juice feeling" (that is, feel a citrus fruit juice flavor)", and "easiness to drink" (a bland flavor and a light aftertaste). The samples that meet the evaluation items were scored as 5, and the samples that do not meet the evaluation items were scored as 1. The average of the five persons' scores was used as the evaluation score. A score of 4 or more is judged as good. The results are shown in Table 2.

**[Table 2]**

| Beverage sample No. | | 1-1 | 1-2 | 1-3 | 1-4 | 1-5 | 1-6 | 1-7 | 1-8 |
|---|---|---|---|---|---|---|---|---|---|
| Composition of beverage sample | Linalool concentration (ppm) | 0 | 0.07 | 0.07 | 0.07 | 0.07 | 0.07 | 0.07 | 0.07 |
| | Linalool concentration/cis-3-hexenol concentration | 0 | 10 | 20 | 30 | 40 | 50 | 60 | 100 |
| | Fruit juice percentage (%) | 0 | 1 | 1 | 1 | 1 | 1 | 1 | 1 |
| | Alcohol concentration (% (v/v)) | 4.0 | 4.0 | 4.0 | 4.0 | 4.0 | 4.0 | 4.0 | 4.0 |
| | Extract content (% (w/w)) | 0.9 | 0.9 | 0.9 | 0.9 | 0.9 | 0.9 | 0.9 | 0.9 |
| | Citric acid acidity (g/100 mL) | 0.15 | 0.15 | 0.15 | 0.15 | 0.15 | 0.15 | 0.15 | 0.15 |
| Results of sensory evaluation | Reduction of miscellaneous tastes and odor of alcohol | 2 | 2 | 4 | 5 | 5 | 4 | 3 | 2 |
| | Citrus fruit juice feeling | 2 | 3 | 4 | 5 | 4 | 4 | 3 | 2 |
| | Easiness to drink | 2 | 3 | 4 | 5 | 5 | 4 | 3 | 2 |
| | Comments | Slight ethanol feeling | Slight ethanol feeling, green | Cohesive, bland, having citrus feeling | Slightly juicy, tight aftertaste, refreshing, flowery | Slightly juicy, tight aftertaste, well-balanced | Slightly complex aftertaste, ill-balanced, herbal | Slight astringency, flowery, grassy | Astringency, sourness, fatty, heavy |

### <Example 2>

### Lemon-flavored alcoholic beverage

Base liquid 1 having the composition shown in Table 1 was blended with linalool in an amount of 0.07 ppm, and cis-3-hexenol in an amount such that the (linalool concentration/cis-3-hexenol concentration) was 30, and carbon dioxide was dissolved in the same manner as in Example 1 to prepare beverage sample 2-1.

On the other hand, to base liquid 1 having the composition shown in Table 1, linalool in a concentration of 0.07 ppm, cis-3-hexenol in an amount such that the (linalool concentration/cis-3-hexenol concentration ratio was 30, and 6-fold concentrated lemon transparent fruit juice in an amount such that the fruit juice percentage was a value shown in Table 3 were added, and carbon dioxide gas was dissolved in the same manner as above to prepare beverage samples 2-2 through 2-6.

In the same manner as in Example 1, the extract content (% (w/w)) and citric acid acidity (g/100 mL) of the obtained beverage samples 2-1 to 2-6 were determined. These were also subjected to sensory tests. The results are shown in Table 3.

**[Table 3]**

| Beverage sample No. | | 2-1 | 2-2 | 2-3 | 2-4 | 2-5 | 2-6 |
|---|---|---|---|---|---|---|---|
| Composition of beverage sample | Linalool concentration (ppm) | 0.07 | 0.07 | 0.07 | 0.07 | 0.07 | 0.07 |
| | Linalool concentration/cis-3-hexenol concentration | 30 | 30 | 30 | 30 | 30 | 30 |
| | Fruit juice percentage (%) | 0 | 1 | 2 | 3 | 4 | 10 |
| | Alcohol concentration (% (v/v)) | 4.0 | 4.0 | 4.0 | 4.0 | 4.0 | 4.0 |
| | Extract content (% (w/w)) | 0.9 | 0.9 | 0.9 | 0.9 | 0.9 | 0.9 |
| | Citric acid acidity (g/100 mL) | 0.15 | 0.15 | 0.15 | 0.15 | 0.15 | 0.15 |
| Results of sensory evaluation | Reduction of miscellaneous tastes and odor of alcohol | 5 | 5 | 4 | 4 | 3 | 1 |
| | Citrus fruit juice feeling | 3 | 5 | 4 | 4 | 3 | 2 |
| | Easiness to drink | 5 | 5 | 4 | 4 | 3 | 1 |
| | Comments | Slightly juicy, tight aftertaste | Slightly juicy, tight aftertaste, refreshing, flowery | Slightly juicy, tight aftertaste | Slightly complex aftertaste, sourness | Astringency, slightly ethanol feeling | Astringency |

With reference to Tables 2 and 3, in beverage samples having low extract content and alcohol concentration, including a lemon flavoring, and including no fruit juice, an alcohol odor was perceived (beverage sample 1-1). By adding linalool and cis-3-hexenol in well balance, alcohol odor disappeared (beverage sample 2-1). By adding fruit juice, bitterness and miscellaneous tastes were suppressed, and fruit juice feeling and complex taste were added. When linalool and cis-3-hexenol were ill-balanced, and the amount of fruit juice was too large, sourness and astringency were perceived (beverage samples 1-8 and 2-6).

### <Example 3>

### Grapefruit-flavored alcoholic beverage

**[Table 4]**

| Raw material | Blending amount |
|---|---|
| Brewing alcohol (alcohol concentration 95% (v/v)) | 43.2mL |
| 55% Fructose-glucose liquid sugar | 10.0 g |
| Grapefruit flavoring | 1.0 g |
| Citric acid (anhydrous) | 1.5 g |
| Sodium citrate | 0.4 g |
| Pure water | Until reaching 1,000 mL |
| Total | 1,000 mL |

Base liquid 2 with the composition shown in Table 4 was prepared. Base liquid 2 had an alcohol concentration of 4.0% (v/v), and a sweetness degree of 1.0. In Table 4, as a grapefruit flavoring, a solution in which 300 µL of D-limonene (Food Grade) and 30 mL of ethanol were mixed was used. Carbon dioxide gas was dissolved in base liquid 2 to prepare a grapefruit-flavored alcoholic beverage having a carbon dioxide gas volume of 3.3. This served as beverage sample 3-1.

To base liquid 2, 5-fold concentrated grapefruit transparent fruit juice in an amount such that the fruit juice percentage was 1% (w/w), linalool in a concentration of 2.38 ppm, and cis-3-hexenol in a concentration of 0.08 ppm were added, and carbon dioxide gas was dissolved in the same manner as above to prepare beverage sample 3-2 having a carbon dioxide gas volume of 3.3.

According to the same manner as in Example 1, the extract content (% (w/w)) and citric acid acidity (g/100 mL) of the obtained beverage samples 3-1 and 3-2 were determined, and subjected to sensory tests. The results are shown in Fig. 5.

**[Table 5]**

| Beverage sample No. | | 3-1 | 3-2 |
|---|---|---|---|
| Composition of beverage sample | Linalool concentration (ppm) | 0 | 2.38 |
| | Linalool concentration/cis-3-hexenol concentration | 0 | 30 |
| | Fruit juice percentage (%) | 0 | 1 |
| | Alcohol concentration (% (v/v)) | 4.0 | 4.0 |
| | Extract content (% (w/w)) | 0.9 | 0.9 |
| | Citric acid acidity (g/100 mL) | 0.15 | 0.15 |
| Results of sensory evaluation | Reduction of miscellaneous tastes and odor of alcohol | 2 | 4 |
| | Citrus fruit juice feeling | 2 | 4 |
| | Easiness to drink | 2 | 4 |
| | Comments | Slight bitterness, chemical-like, flat | Juicy, peely, refreshing, flowery |

From the results in Table 5, by adding linalool and cis-3-hexenol, the disappearing effect of the alcohol odor and miscellaneous tastes was shown also in grapefruit-flavored alcoholic beverages having low extract content and alcohol concentration.

## Claims

1. A citrus-flavored carbonated alcoholic beverage including drinking water, carbon dioxide gas, 1 to 5% (v/v) of alcohol, and less than 4% (w/w) in fruit juice percentage of citrus fruit juice, wherein the citrus-flavored carbonated alcoholic beverage includes:
10% (w/w) or less of extract content, and
linalool and cis-3-hexenol in such amounts that their concentration ratio is 15 to 55.

2. The citrus-flavored carbonated alcoholic beverage according to claim 1, wherein the linalool is included in a concentration of 0.01 ppm to 10 ppm.

3. The citrus-flavored carbonated alcoholic beverage according to claim 1 or 2, wherein the citrus is at least one selected from the group consisting of lemon and grapefruit.

4. The citrus-flavored carbonated alcoholic beverage according to any one of claims 1 to 3, including at least one selected from the group consisting of citrus-flavored flavorings, sweeteners and sour agents.

5. The citrus-flavored carbonated alcoholic beverage according to any one of claims 1 to 4, including no high intensity sweetener.

6. The citrus flavored carbonated alcoholic beverage of any one of claims 1 to 5, wherein the citrus-flavored carbonated alcoholic beverage includes 1 to 3% (w/w) in fruit juice percentage of citrus fruit juice.

7. The citrus-flavored carbonated alcoholic beverage according to any one of claims 1 to 6, including 0.3 to 3% (w/w) of extract content.

8. A method for producing a citrus-flavored carbonated alcoholic beverage including drinking water, carbon dioxide gas, 1 to 5% (v/v) of alcohol, and less than 4% (w/w) in fruit juice percentage of citrus fruit juice, the method including:
a step of adjusting the extract content to 10% (w/w) or less; and
a step of including linalool and cis-3-hexenol in such amounts that their concentration ratio is 15 to 55.

9. The method for producing a citrus-flavored carbonated alcoholic beverage according to claim 8, wherein the linalool is included in a concentration of 0.01 ppm to 10 ppm.

10. The method for producing a citrus-flavored carbonated alcoholic beverage according to claim 8 or 9, wherein the citrus-flavored carbonated alcoholic beverage includes 1 to 3% (w/w) in fruit juice percentage of citrus fruit juice.

11. The method for producing a citrus-flavored carbonated alcoholic beverage according to any one of claims 8 to 10, wherein the extract content is adjusted to 0.3 to 3% (w/w).

12. A method for achieving both fruit juice feeling and easiness to drink of a citrus-flavored carbonated alcoholic beverage including drinking water, carbon dioxide gas, 1 to 5% (v/v) of alcohol, and less than 4% (w/w) in fruit juice percentage of citrus fruit juice, the method including:
a step of adjusting the extract content to 10% (w/w) or less; and
a step of including linalool and cis-3-hexenol in such amounts that their concentration ratio is 15 to 55.

13. The method according to claim 12, wherein the linalool is included in a concentration of 0.01 ppm to 10 ppm.

14. The method according to claim 12 or 13, wherein the citrus-flavored carbonated alcoholic beverage includes 1 to 3% (w/w) in fruit juice percentage of citrus fruit juice.

15. The method according to any one of claims 12 to 14, wherein the extract content is adjusted to 0.3 to 3% (w/w).
